# EUROPEAN PATENT APPLICATION

(11) **EP 4 571 555 A1**
(43) Date of publication of application: **18.06.2025**
(21) Application number: 23851990.4
(22) Date of filing: 11.08.2023
(51) Int. Cl.: G06F 21/62

(54) **DATA DELETION METHOD AND ELECTRONIC DEVICE**

(30) Priority: 12.08.2022 CN 202210969912
(71) Applicant: Vivo Mobile Communication Co., Ltd., Dongguan, Guangdong 523863 (CN)
(72) Inventor: HU, Zhiyuan, Dongguan, Guangdong 523863 (CN); HE, Cheng, Dongguan, Guangdong 523863 (CN); TANG, Huan, Dongguan, Guangdong 523863 (CN); LIU, Ruyi, Dongguan, Guangdong 523863 (CN); SU, Tao, Dongguan, Guangdong 523863 (CN); ZHOU, Wentao, Dongguan, Guangdong 523863 (CN)
(74) Representative: Murgitroyd & Company
(86) International application number: PCT/CN2023/112560
(87) International publication number: WO 2024/032770

(57) **Abstract**

This application pertains to the communication field, and discloses a data deletion method. The method includes: receiving a first instruction, where the first instruction is used to instruct an electronic device to delete target data, and the first instruction includes marker information of the target data; and deleting, in response to the first instruction, the target data from a target storage area based on the marker information in the first instruction, where the target storage area includes a replay protected memory block RPMB, or a user data area UDA and a replay protected memory block RPMB.

## Description

### CROSS-REFERENCE TO RELATED APPLICATIONS

This application claims priority to Chinese Patent Application No. 202210969912.4, filed in China on August 12, 2022, which is incorporated herein by reference in its entirety.

### TECHNICAL FIELD

This application pertains to the communication field, and specifically relates to a data deletion method and an electronic device.

### BACKGROUND

Currently, plenty of private data is stored in an electronic device (such as a mobile phone). If a mobile phone of a user is lost or abandoned, it is necessary to delete private data of the user to prevent the private data of the user from being leaked.

Therefore, to resolve the foregoing problem, factory settings of the electronic device can be restored.

However, in the foregoing method, it takes a long time for the electronic device to restore the factory settings, and the restoration can be performed only during charging. Therefore, the method is not applicable to an application scenario in which the electronic device is lost. Consequently, the electronic device has low efficiency and poor flexibility in processing private data.

### SUMMARY

An objective of embodiments of this application is to provide a data deletion method to improve efficiency and flexibility of an electronic device in processing private data.

According to a first aspect, an embodiment of this application provides a data deletion method. The method includes: receiving a first instruction, where the first instruction is used to instruct an electronic device to delete target data, and the first instruction includes marker information of the target data; and deleting, in response to the first instruction, the target data from a target storage area based on the marker information in the first instruction, where the target storage area includes a replay protected memory block RPMB, or a user data area UDA and a replay protected memory block RPMB.

According to a second aspect, an embodiment of this application provides a data deletion apparatus. The apparatus includes a receiving module and a deletion module. The receiving module is configured to receive a first instruction, where the first instruction is used to instruct an electronic device to delete target data, and the first instruction includes marker information of the target data. The deletion module is configured to delete, in response to the first instruction received by the receiving module, the target data from a target storage area based on the marker information in the first instruction, where the target storage area includes a replay protected memory block RPMB, or a user data area UDA and a replay protected memory block RPMB.

According to a third aspect, an embodiment of this application provides an electronic device. The electronic device includes a processor and a memory. The memory stores a program or instructions capable of running on the processor. When the program or instructions are executed by the processor, the steps of the method according to the first aspect are implemented.

According to a fourth aspect, an embodiment of this application provides a readable storage medium. The readable storage medium stores a program or instructions. When the program or instructions are executed by a processor, the steps of the method according to the first aspect are implemented.

According to a fifth aspect, an embodiment of this application provides a chip. The chip includes a processor and a communication interface. The communication interface is coupled to the processor. The processor is configured to run a program or instructions to implement the method according to the first aspect.

According to a sixth aspect, an embodiment of this application provides a computer program product. The program product is stored in a storage medium. The program product is executed by at least one processor to implement the method according to the first aspect.

In the embodiments of this application, the electronic device may receive the first instruction, where the first instruction is used to instruct the electronic device to delete the target data, and the first instruction includes the marker information of the target data; and delete, in response to the first instruction, the target data from the target storage area based on the marker information in the first instruction, where the target storage area includes the replay protected memory block RPMB, or the user data area UDA and the replay protected memory block RPMB. The electronic device may receive the first instruction for instructing the electronic device to delete the target data, and delete the target data from the RPMB or from the UDA and the RPMB based on the marker information of the target data included in the first instruction. Therefore, even if an electronic device of a user is lost, private data of the electronic device can be deleted quickly and remotely. This improves efficiency and flexibility of the electronic device in processing the private data.

### BRIEF DESCRIPTION OF DRAWINGS

FIG. 1 is an architecture diagram of a storage system of an electronic device according to an embodiment of this application;
FIG. 2 is a flowchart of a data deletion method according to an embodiment of this application;
FIG. 3 is a first system architecture diagram of a data storage method according to an embodiment of this application;
FIG. 4 is a second system architecture diagram of a data storage method according to an embodiment of this application;
FIG. 5 is a first system architecture diagram of a data deletion method according to an embodiment of this application;
FIG. 6 is a second system architecture diagram of a data deletion method according to an embodiment of this application;
FIG. 7 is a schematic diagram of a structure of a data deletion apparatus according to an embodiment of this application;
FIG. 8 is a first schematic diagram of a hardware structure of an electronic device according to an embodiment of this application; and
FIG. 9 is a second schematic diagram of a hardware structure of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

A data deletion method provided in the embodiments of this application is hereinafter described in detail by using specific embodiments and application scenarios thereof with reference to the accompanying drawings.

When an electronic device (such as a mobile phone) of a user is lost or stolen, how to delete sensitive information on the mobile phone quickly, efficiently, securely, and remotely at an earliest possible time, or when a mobile phone of a user needs to be abandoned or transferred, how to ensure that sensitive information of the user has been securely deleted, so that even if other users obtain the mobile phone, they cannot obtain the sensitive information of the user - this is an urgent problem to be resolved.

However, currently, most electronic devices (mobile terminals) use NAND flash memories. A NAND flash memory generally includes one or more flash memory chips. A flash memory chip includes one or more dies (die) or logical unit numbers (Logical Unit Number, LUN). A die or LUN includes a plurality of planes (plane). A plane includes a plurality of blocks (block). A block includes a plurality of pages. A page includes a plurality of cells (cell). A cell is a smallest working unit for executing a data storage task in the flash memory. Based on an amount of data that can be stored in each cell, the flash memory is divided into single-level cells (Single Level Cell, SLC) (1 bit/cell), multilevel cells (Multi Level Cell, MLC) (2 bits/cell), triple-level cells (Triple Level Cell, TLC) (3 bits/cell), and quad-level cells (Quad-level cell, QLC) (4 bits/cell), with sequentially decreasing costs, increasing capacities, and decreasing durability.

For data in the flash memory, there are three basic operations: reading, writing, and erasing. Reading and writing are smallest operational units of a page. Erasing is a smallest operational unit of a block. There is a limit on the number of times a flash memory can be erased. Theoretically, the number of times a flash memory can be erased is 1,000,000. For performance reasons, the NAND flash memory usually writes updated data to a free memory page by means of "out-of-place update", instead of writing the updated data to a memory page in which original data is located. The memory page in which the original data is located is only marked as invalid, and physical deletion occurs later during garbage collection (Garbage Collection, GC). Therefore, before garbage collection in the NAND flash memory, the original old data is still stored in the flash memory, and an attacker can obtain user data by using a disk reading tool. An "in-place update" operation used by a conventional mechanical hard disk drive (Hard Disk Drive, HDD) (that is, updated data directly overwrites (overwrite) or replaces original data) is not suitable for the NAND flash memory.

However, "out-of-place update" of the NAND flash memory may generate a lot of invalid data in the flash memory, which causes a severer security threat. Therefore, it is particularly important to study secure deletion of data in the NAND flash memory.

Currently, the flash memory may include four partitions: BOOT (boot partition), a general purpose partition (General Purpose Partition, GPP), a replay protected memory block (Replay Protected Memory Block, RPMB), and a user data area (User Data Area, UDA).

The BOOT is mainly used for system startup. The GPP is mainly used to store system data or user data. However, the GPP is usually not present when the chip is delivered from the factory, and will be present only after active configuration. Generally, no GPP is configured for an electronic device. The RPMB is mainly used to store security-related data, such as keys, fingerprints, and data related to secure payment. The UDA is mainly used to store system data and user data.

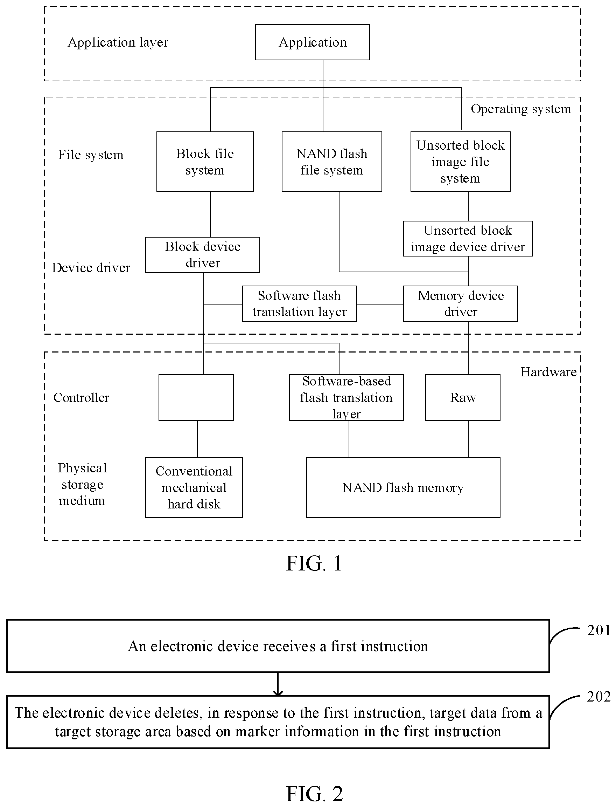

A main purpose of the data deletion method provided in the embodiments of this application is to allow data in an electronic device to be securely deleted. Secure deletion of data means that after the data is deleted, an attacker can neither recover the deleted data nor obtain any information about the data. However, due to complexity of a storage system, it is a challenging task to delete the data securely. A modem storage system usually includes a plurality of layers (for example, FIG. 1), and a deletion operation in one layer usually cannot securely delete data completely because there may be data leakage in other layers. For example, a selected photo is deleted from a "Gallery" application, but the deletion operation cannot ensure that the deleted photo will really become inaccessible. After receiving a deletion request from the "Gallery" application (belonging to an application layer), the system may simply modify metadata in a file system layer (for example, change a block assignment table and invalidate deleted data), so that the photo appears to have been deleted in the application layer. However, actual content is still stored in a physical storage medium layer, and an attacker can recover the data in the physical storage medium by using some tools. Therefore, secure deletion of data needs to ensure that the deleted content is inaccessible at every layer of the storage system.

The data deletion method provided in the embodiments of this application can delete a UDA partition and an RPMB based on a mobile phone. Space of the RPMB is small, only up to 16 MB currently. Therefore, other important sensitive data that cannot be stored is stored in the UDA area other than the RPMB. For example, a small part of data of a fingerprint template used for fingerprint authentication is stored in the RPMB, but most of the data is stored in the UDA area. Therefore, when the mobile phone is lost or stolen, it is necessary to physically erase information such as keys and fingerprints in the RPMB, and also physically erase the important data in the UDA.

FIG. 1 is an architecture diagram of a storage system of an electronic device. As shown in FIG. 1, functions of modules in each layer in the architecture diagram of the storage system of the electronic device are as follows:

### Physical storage medium (physical medium)

The physical storage medium, such as an HDD or a NAND flash memory, may be used to store data. The physical storage medium is always accessed through a controller.

### Controller

A basic function of the controller is to convert a data format (such as a voltage) on the physical storage medium into another format (such as a binary value) that can be understood by an upper layer. The controller may provide standardized and clearly defined hardware interfaces, such as an integrated device circuit (Advanced Technology Attachment, ATA) and a small computer system interface (Small Computer System Interface, SCSI), allowing data to be read from the physical storage medium or written to the physical storage medium. Because the HDD uses in-place update, its controller usually maps logical block addresses to a storage location on the physical storage medium consistently. On the contrary, because the NAND flash memory uses out-of-place for performance reasons, the NAND flash memory is usually managed through an FTL or a flash-specific file system.

### Device driver

The device driver may integrate access to different types of hardware by exposing a common simple interface in a form of software. A block device driver interface allows blocks to be read from and written to a logical address. A block device driver may be used on the NAND flash memory controlled by the HDD or encapsulated by the flash translation layer (Flash Translation Layer, FTL).

### Memory technology device (Memory Technology Device, MTD)

The memory technology device is another device driver, which may be used to directly access a raw NAND flash memory. The memory technology device allows reading and writing, but blocks need to be erased before writing, which occurs at a coarse granularity.

### Unsorted block image (Unsorted block images, UBI)

The unsorted block image is another interface to access the flash memory, and is built on an interface of the memory technology device and can simplify some aspects in using a raw flash memory.

### File system

The file system is responsible for organizing logical data sequences between available blocks on the physical storage medium through an interface provided by the device driver. The file system includes: (1) a block file system built on a block device, for example, a file allocation table (File allocation table, FAT) 32, a fourth extended file system (Fourth extended file system, EXT4), and a new technology file system (New Technology File System, NTFS); (2) a flash file system built on an MTD device, for example, a file system (Yet Another Flash File System, YAFFS) specially designed for the NAND flash memory; and (3) a UBI file system (Unsorted Block Image File System, UBIFS), built on a UBI device.

### Application layer

The application layer may provide an interface for a user.

Currently, to ensure that sensitive data in a mobile phone of the user can be securely deleted, the following five methods are used for implementation.

First method: destroying the storage medium.

For example, the storage medium is melted into liquid metal by smelting, or the storage medium is crushed into small pieces of irretrievable scrap metal by crushing, so that data on the storage medium cannot be recovered.

However, this method is applicable only to an application scenario in which the user abandons the mobile phone, but not applicable to an application scenario in which the mobile phone of the user is transferred, lost, or stolen.

Second method: restoring factory settings.

Currently, there are two solutions to restoring the factory settings.

Solution a: using a secure erasure function (SecureWipePartition) of Android, that is, discard command + overwrite 0.

However, it takes 10 minutes to actually restore factory settings of a 128 GB mobile phone when solution a is used to restore the factory settings of the mobile phone.

Solution b: using a purge function provided by universal flash storage (Universal Flash Storage, UFS) to implement secure erasure in a purge operation.

However, physical erasure takes a long time when solution b is used to restore the factory settings of the mobile phone; and in use of this function, a global configuration of the UFS-based file system needs to be modified, and this configuration may affect stability of the entire storage system. Therefore, currently, purge is not widely used for secure erasure of data in this technical field.

Because an operation time of the method of restoring the factory settings of the mobile phone is long, and the operation can be performed only when the mobile phone is being charged, the method is inapplicable to an application scenario in which the mobile phone is stolen or lost.

Third method: overwriting (overwrite)/replacing sensitive data.

For example, a random number is generated for sensitive data, and the random number is written into storage space of the sensitive data to overwrite/replace the sensitive data, so that it is impossible to recover the sensitive data from the storage medium. Different organizations have different standards on the number of overwrite/replacement operations. For example, the NIST recommends that a storage medium should be overwritten/replaced for at least three times ([T. Grance, M. Stevens, and M. Myers, "Guide to Selecting Information Security Products," chapter 5.9: Media Sanitizing. National Institute of Standards and Technology (NIST), October 2003]). Peter Gutmann developed a 35-time data overwrite/replacement solution ([P. Gutmann, "Secure Deletion of Data from Magnetic and Solid-State Memory," In Proceedings of the Sixth USENIX UNIX Security Symposium, pages 77-90, San Jose, CA, July 1996. USENIX Association.]).

However, the HDD is based on magnetism and can support a property of "in-place update", and for performance reasons, the NAND flash memory usually writes updated data to a free memory page by means of "out-of-place update", instead of writing the updated data to a memory page in which original data is located. The memory page in which the original data is located is only marked as invalid, and physical deletion occurs later during garbage collection (GC). Therefore, before garbage collection in the NAND flash memory, the original old data is still stored in the flash memory, and an attacker can obtain user data by using a tool. Therefore, the data overwriting/replacing method is applicable only to a conventional HDD storage medium, and inapplicable to the NAND flash memory of the current mobile terminal, and particularly inapplicable to an application scenario in which the mobile phone is lost or stolen.

Fourth method: encrypting sensitive data for storage.

For example, when specified sensitive data needs to be deleted, only a key corresponding to encrypted sensitive data needs to be overwritten/replaced.

However, same as the third method, this method is inapplicable to secure deletion of data in the NAND flash memory of the current mobile terminal, and particularly inapplicable to the application scenario in which the mobile phone is lost or stolen.

Fifth method: encrypting sensitive data for storage.

For example, when specified sensitive data needs to be deleted, only an association with a key corresponding to encrypted sensitive data is canceled.

Currently, for the flash memory in the mobile phone, this solution is used for file based encryption (File Based Encryption, FBE) used by the Android system. Based on FBE of fscrypt, fscrypt has two ioctl functions (FS_IOC_REMOVE_ENCRYPTION_KEY and FS_IOC_REMOVE_ENCRYPTION_KEY_ALL_USERS), which can be invoked by a virtual file system (Virtual File System, VFS) and an upper-layer application to delete a key added to keyring by the ioctl function FS_IOC_ADD_ENCRYPTION_KEY, but the key deleted by this function may not be deleted from the physical storage medium immediately, and may not be physically deleted from the storage medium until the storage controller performs garbage collection (GC) on a block in which the key is located. Therefore, this method is neither inapplicable to the application scenario in which the mobile phone is lost or stolen, nor inapplicable to the application scenario in which the mobile phone is abandoned or transferred.

To securely delete sensitive information of the user immediately when the mobile phone is lost or stolen, the embodiments of this application provide a secure data deletion method. Because security of original unencrypted sensitive data cannot be ensured even if it is encrypted later for storage after the sensitive data is stored in plaintext, sensitive data of the user is encrypted at an earliest time for storage. Because physical erasure of data in the NAND flash memory is performed based on blocks (block), important information (such as an encryption key or information related to key generation, and file metadata) is stored in relatively concentrated blocks in the flash memory. In this way, in a case that the mobile phone is stolen or lost, the blocks storing the important information can be physically erased immediately. Because space occupied by the important information is small, the time required for the physical erasure is also short. Therefore, it is impossible to obtain a correct decryption key, and even if an attacker obtains the mobile phone of the user, the attacker cannot obtain the sensitive information of the user through decryption. In addition, when abandoning or transferring the mobile phone, the user can not only physically erase the important information, but also restore the factory settings or even physically erase the entire flash memory.

Therefore, in the case that the mobile phone is stolen or lost, because the sensitive data of the user has been encrypted before storage, to destroy the sensitive data of the user efficiently, quickly, and remotely, the foregoing important information including the encryption key of the sensitive data or information related to the generation of the encryption key can be physically deleted immediately. Because the correct decryption key cannot be obtained, the attacker cannot obtain the sensitive information of the user through decryption even if the attacker obtains the mobile phone of the user. In addition, if the user needs to abandon or transfer the mobile phone, the user can physically delete the important information such as the encryption key of the sensitive data or the information related to the generation of the encryption key by using an electronic device, and can further restore factory settings of the entire flash memory or even physically delete all the data in the flash memory.

An embodiment of this application provides a data deletion method, applied to an electronic device. FIG. 2 is a flowchart of a data deletion method according to an embodiment of this application. As shown in FIG. 2, the data deletion method provided in this embodiment of this application may include the following step 201 and step 202.

Step 201: An electronic device receives a first instruction.

In this embodiment of this application, the first instruction is used to instruct the electronic device to delete target data, and the first instruction includes marker information of the target data.

In this embodiment of this application, if the electronic device receives the first instruction, sent by a user on a target device, for deleting the target data, the electronic device may delete the target data based on the marker information of the target data included in the first instruction.

Optionally, in this embodiment of this application, the first instruction may be sent by a target device different from the electronic device, or the first instruction may be sent by a target device same as the electronic device, that is, if the electronic device of the user is lost or not within a reachable range of the user, the user may log in to a terminal management server by using the target device different from the electronic device, to send the first instruction to the electronic device, so that the electronic device can perform a remote secure deletion operation (for example, a secure data deletion function provided in this embodiment of this application for invoking a file system: fs_secure_deletion (..., flag_I) on sensitive data, where flag_I is the marker information of the target data). To ensure security, a logical function of this operation is implemented in a TEE (for example, a secure deletion TA). Alternatively, the user may operate the electronic device (that is, the target device) to trigger the electronic device to delete data securely.

It should be noted that the method in this embodiment of this application is inapplicable to a case that a mobile phone is lost or stolen and that the mobile phone is offline.

In this embodiment of this application, to quickly, efficiently, and securely delete sensitive data of the user in a flash memory, when an encryption key or information related to key generation is created and stored in an application layer of the electronic device, an attribute tag (marker information of the target data) needs to be added to file metadata; and a secure data deletion logical module is added in the application layer. When the encryption key or the information related to key generation is stored in a file system layer, it is necessary to add an attribute tag to a corresponding function and assign a fixed logical storage address, and necessary to add a secure data deletion function. When the encryption key or the information related to key generation is stored in a device driver layer, it is necessary to add a piece of marker information to a corresponding function, and necessary to add a secure data deletion function. When the encryption key or the information related to key generation is stored in a flash translation layer (FTL), it is necessary to add an attribute tag to a corresponding function, add a secure data deletion function, add an important information mapping table, and support sending of a flash memory physical deletion command, a physical block can be marked as a block for storing important information, and the like.

Step 202: The electronic device deletes, in response to the first instruction, the target data from a target storage area based on the marker information in the first instruction.

The target storage area includes a replay protected memory block RPMB, or a user data area UDA and a replay protected memory block RPMB.

Optionally, in this embodiment of this application, the target data further includes data attribute information, the data attribute information is used to identify attributes of the sensitive data, and the data attribute information includes at least one of the following: a file size, a file permission, a file timestamp, an extended attribute, and configuration information; and the data attribute information and the key information are both stored in the target storage area.

Optionally, in a first implementation provided in this embodiment of this application, the deleting the target data from a target storage area based on the marker information in the first instruction in the foregoing step 202 may be specifically implemented through the following step 202a to step 202c.

Step 202a: In a case that the target data is stored in the RPMB, the electronic device sends a physical deletion request message to the RPMB based on the marker information in the first instruction by using a trusted application in a trusted execution environment.

In this embodiment of this application, the electronic device may send the physical deletion request message to the RPMB by using a secure deletion TA in the TEE, that is, an RPMB purge/sanitizer enabler request message.

It should be noted that UFS4.0 and later protocols use a Purge command, and that eMMC5.1 and later protocols use a Sanitizer command.

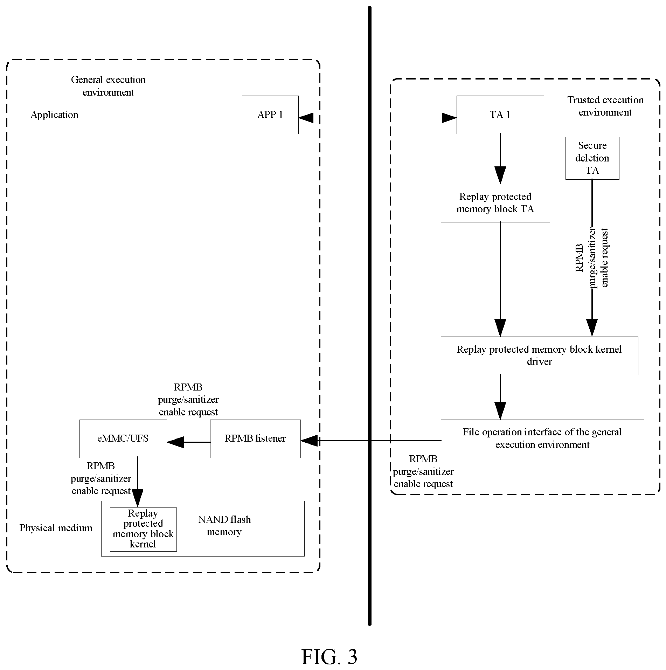

FIG. 3 is a system architecture diagram of a data deletion method according to an embodiment of this application. As shown in FIG. 3, the data deletion method provided in this embodiment of this application may delete data by using a system architecture shown in FIG. 3.

Step 202b: The electronic device sends the physical deletion request message to an RPMB listener by using an RPMB kernel driver and a file operation interface.

In this embodiment of this application, the electronic device may send the physical deletion request message to the RPMB listener (RPMB Listener on a REE side) by using the RPMB kernel driver (that is, the RPMB kernel driver) and the file operation interface (that is, a REE file operation interface).

Step 202c: The electronic device deletes the target data from the RPMB through a control module of a UFS-based file system by using the RPMB listener.

In this embodiment of this application, the electronic device may delete the target data from the RPMB through the control module of the UFS-based file system (that is, eMMC/UFS on the REE side).

Optionally, in this embodiment of this application, the electronic device may physically delete target data stored in an RPMB partition in the flash memory through the control module of the UFS-based file system by using the RPMB listener.

Optionally, in this embodiment of this application, after the target data is physically deleted from the RPMB partition, an RPMB purge/sanitizer enabler response message is returned to the secure deletion TA through the original path.

It should be noted that in the entire operation process, all modules that need to be passed through need to be enhanced to support transmission of the RPMB purge/sanitizer enabler request message and the corresponding response message.

Optionally, in a second implementation provided in this embodiment of this application, the target data includes first target data and second target data; and the deleting the target data from a target storage area based on the marker information in the first instruction in the foregoing step 202 may be specifically implemented through the following step 202d.

Step 202d: In a case that the target data is stored in the RPMB and the UDA, the electronic device deletes the first target data from the RPMB and the second target data from the UDA based on the marker information in the first instruction.

In this embodiment of this application, in the case that the target data is stored in the RPMB and the UDA, the electronic device needs to separately delete the first target data from the RPMB and the second target data from the UDA based on the marker information in the first instruction.

Optionally, in this embodiment of this application, the deleting the first target data from the RPMB based on the marker information in the first instruction in the foregoing step 202d may be specifically implemented through the following step 202d1 to step 202d3.

Step 202d1: The electronic device sends a physical deletion request message to the RPMB based on the marker information in the first instruction by using a trusted application in a trusted execution environment.

Step 202d2: The electronic device sends the physical deletion request message to an RPMB listener by using an RPMB kernel driver and a file operation interface.

Step 202d3: The electronic device deletes the first target data from the RPMB through a control module of a UFS-based file system by using the RPMB listener.

It should be noted that for a specific implementation process of step 202d1 to step 202d3, reference may be made to the foregoing step 202a to step 202c. Details are not described herein again.

Optionally, in this embodiment of this application, the deleting the second target data from the UDA in the foregoing step 202d may be specifically implemented through the following step 202d4 and step 202d5.

Step 202d4: The electronic device addresses the second target data from a fixed logical page number LPN in a file system layer based on the marker information in the first instruction by using a first deletion module in the file system layer and a second deletion module in a device driver layer, to obtain a target virtual address.

In this embodiment of this application, the electronic device may address the second target data from the fixed logical page number LPN in the file system layer based on the marker information in the first instruction by using the first deletion module in the file system layer and the second deletion module in the device driver layer, to obtain the target virtual address, so that the electronic device can delete the second target data based on the target virtual address.

Optionally, in this embodiment of this application, the electronic device may address the second target data from the fixed logical page number LPN in the file system layer based on the marker information in the first instruction by using a first deletion function in the file system layer and a second deletion function in the device driver layer, to obtain the target virtual address, so that the electronic device can delete the second target data based on the target virtual address.

It should be noted that the first deletion module/function and the second deletion module/function include marker information, where the marker information is used to determine a target data block storing the second target data.

Optionally, in this embodiment of this application, the electronic device may address, based on the first instruction and the marker information of the target data by using a preset deletion function in the file system layer and a preset deletion function in the device driver layer, all fixed logical page numbers LPNs storing the second target data, to obtain the target virtual address.

For example, the preset deletion function in the file system layer may be: fs_secure_deletion (..., flag_I); and the preset deletion function in the device driver layer may be: block_secure_deletion (..., flag_I).

Optionally, in this embodiment of this application, the electronic device may add a logical function module in the trusted execution environment TEE (for example, a secure deletion trusted application (secure deletion TA)), and the logical module can receive a secure deletion instruction from a remote server, to support the user in remotely performing a secure deletion operation on important data of the user by logging in to the terminal management server when the mobile phone of the user is lost or stolen.

It should be noted that the remote execution of secure deletion requires the electronic device to be in an online state.

Optionally, in this embodiment of this application, the electronic device may add, in the application layer, a system management function (such as a secure deletion client (secure deletion Client) provided in this embodiment of this application), to support the user in securely deleting the important data of the user when the user abandons or transfers the old mobile phone. In addition, when performing this operation, the user needs to be authenticated and authorized by the secure deletion TA in the TEE to prevent unintentional deletion of sensitive data.

Step 202d5: The electronic device determines, from a target mapping table in a flash translation layer based on the target virtual address and the marker information by using a preset deletion module in the flash translation layer, a target data block storing the second target data, and deletes the second target data in the target data block.

In this embodiment of this application, after obtaining the target virtual address, the electronic device may determine, from the target mapping table in the flash translation layer based on the target virtual address and the marker information by using the preset deletion module in the flash translation layer, the target data block storing the second target data, and delete the second target data in the target data block.

For example, the preset deletion module in the flash translation layer may be: ftl_secure_deletion (..., flag_I).

It should be noted that the preset deletion module/function includes marker information.

Optionally, in this embodiment of this application, the electronic device may add a function/module in each of the file system layer (for example, ext4 + fscrypt in this embodiment of this application), the device driver layer, and the flash translation layer, such as the deletion function/module (fs_secure_deletion (..., flag_I)) in the file system layer, the deletion function/module (block_secure_deletion (..., flag_I)) in the device driver layer, and the deletion function/module (ftl_secure_deletion (..., flag_I)) in the flash translation layer that are provided in this embodiment of this application, so that the electronic device can delete the second target data based on the newly added deletion modules.

Optionally, in this embodiment of this application, the deleting the second target data in the target data block in the foregoing step 202d5 may be specifically implemented through the following step a or step b.

Step a: The electronic device starts garbage collection by using a controller, and reclaims the target data block.

Optionally, in this embodiment of this application, the electronic device may modify a garbage collection (GC) function in the flash translation layer, so that the deletion function (ftl_secure_deletion (..., flag_I)) in the flash translation layer can trigger the GC to actively reclaim the target data block with the marker information.

Step b: The electronic device invokes a hardware physical deletion command by using the controller, to delete the second target data from the target data block.

Optionally, in this embodiment of this application, the electronic device may invoke the hardware physical deletion command (such as secure erase (secure erase), secure trim (secure trim), sanitize, or purge) in the flash translation layer, so that the deletion function (ftl_secure_deletion (..., flag_I)) can actively trigger invocation of the flash memory physical deletion command based on the target mapping table, and that the second target data can be deleted from the target data block.

It should be noted that a name of the physical deletion command is related to a manufacturer of the flash memory and a version of eMMC.

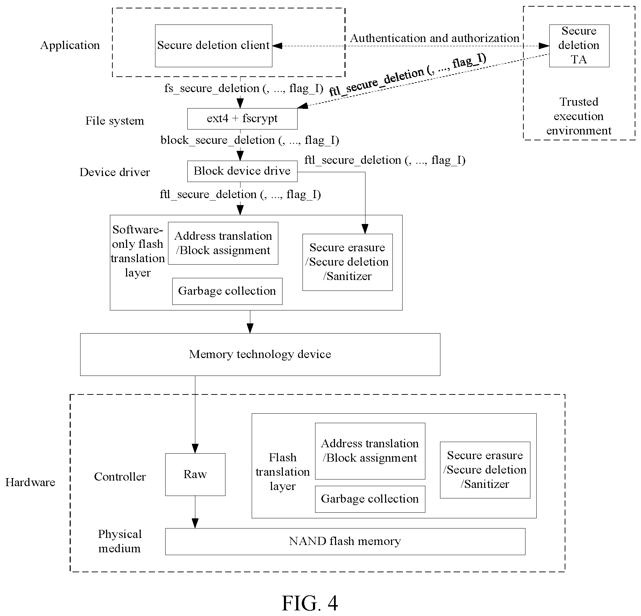

FIG. 4 is a system architecture diagram of a data deletion method according to an embodiment of this application. As shown in FIG. 4, the data deletion method provided in this embodiment of this application may delete data by using a system architecture shown in FIG. 4.

As shown in FIG. 4, the data deletion method provided in this embodiment of this application may be implemented through the following step 11 to step 14.

Step 11: The electronic device adds a logical function module in the TEE, for example, adds a secure deletion TA in the TEE, that is, the secure deletion TA.

Step 12: In a case that the electronic device receives a secure deletion operation of the user on important sensitive data (that is, the second target data), that is, the first instruction (secure deletion Client), and that the first instruction is authenticated and authorized (for example, authentication and authorization in secure deletion TA), the electronic device invokes, based on the flag_I in the first instruction, fs_secure_deletion (..., flag_I), that is, the deletion module in the file system layer.

Step 13: The electronic device invokes block_secure_deletion (..., flag_I) in the file system layer, that is, the deletion module in the device driver layer, and addresses the second target data from the fixed logical page number LPN in the file system layer based on the flag_I to obtain the target virtual address.

Step 14: The electronic device invokes ftl_secure_deletion (..., flag_I) in the device driver layer, that is, the deletion module in the flash translation layer, determines, from the target mapping table based on the flag_I, the target data block storing the second target data, and starts garbage collection for the target data block by using the controller, to reclaim the target data block; or invokes the hardware physical deletion command by using the controller, to delete the second target data from the target data block, to delete the second target data from a software flash translation layer (software FTL) and a hardware flash translation layer respectively.

This embodiment of this application provides a data deletion method. In this embodiment of this application, the electronic device may receive the first instruction, where the first instruction is used to instruct the electronic device to delete the target data, and the first instruction includes the marker information of the target data; and delete, in response to the first instruction, the target data from the target storage area based on the marker information in the first instruction, where the target storage area includes the replay protected memory block RPMB, or the user data area UDA and the replay protected memory block RPMB. The electronic device may receive the first instruction for instructing the electronic device to delete the target data, and delete the target data from the RPMB or from the UDA and the RPMB based on the marker information of the target data included in the first instruction. Therefore, even if the electronic device of the user is lost, private data of the electronic device can be deleted remotely. This improves efficiency and flexibility of the electronic device in processing the private data.

Optionally, in this embodiment of this application, the target data includes encrypted key information; and the data deletion method provided in this embodiment of this application further includes the following step 301 and step 302.

Step 301: The electronic device encrypts either of an encryption key of sensitive data and a key material for generating the encryption key, to form the encrypted key information.

Optionally, in this embodiment of this application, in a case that the sensitive data of the electronic device is generated for the first time, either of the encryption key of the sensitive data and the key material for generating the encryption key may be encrypted by using an existing encryption key or information related to key generation, or a system-related function (such as a key or key material generation function: key/key_material generation process) may generate an encryption key or information related to key generation (such as a random number, an initialization vector, a timestamp, and a file identifier) for the encryption key of the sensitive data.

Optionally, in this embodiment of this application, the electronic device may use an existing encryption system, such as fscrypt integrated with ext4/F2FS/UBIFS, or eCryptfs, EncFS, gocryptfs, or the like located between a VFS and ext4/F2FS/UBIFS, to encrypt either of the encryption key of the sensitive data and the key material for generating the encryption key.

Optionally, in this embodiment of this application, the system-related function of the electronic device (such as the key or key material generation function: key/key_material generation process) obtains a related key from Keymaster in the trusted execution environment TEE to encrypt either of the encryption key of the sensitive data and the key material for generating the encryption key.

It should be noted that because a current encrypting file system does not support metadata encryption of a file, only either of the encryption key of the sensitive data and the key material for generating the encryption key or the like can be encrypted herein.

Step 302: The electronic device stores the encrypted key information in the target storage area.

The key material for generating the encryption key includes at least one of the following: a random number, an initialization vector, a timestamp, and a file identifier.

In this embodiment of this application, after generating the encrypted key information, the electronic device may store the encrypted key information in the target storage area.

Optionally, in this embodiment of this application, when the electronic device needs to store the encrypted key information in a form of a file, a piece of marker information (attribute tag (such as flag_I)) is added to the encrypted key information. The encrypted key information is transmitted to a flash translation layer (Flash Translation Layer, FTL) through ext4/F2FS/UBIFS + fscrypt (such as a reserved field in a data structure of an ext4 index node inode) and a device driver layer, and the encrypted key information and the attribute tag are stored in a memory through the FTL.

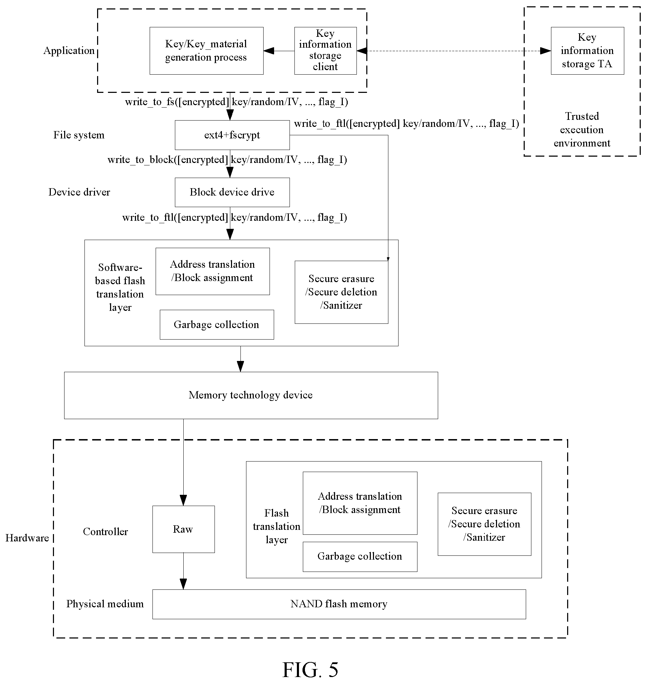

FIG. 5 is a system architecture diagram of a data storage method according to an embodiment of this application. As shown in FIG. 5, an electronic device may encrypt encrypted key information for storage based on a system architecture provided in FIG. 5, so that physical deletion can be performed quickly and efficiently later.

As shown in FIG. 5, the data storage method provided in this embodiment of this application may be implemented through the following step 21 to step 26.

Step 21: An electronic device adds a logical function module in a TEE, for example, adds a key information storage TA in the TEE, that is, a Keymaster TA.

Step 22: The electronic device obtains, in an application layer, a related key from Keymaster in the TEE by using a system-related function such as a key/key _material generation process, to encrypt either of an encryption key of sensitive data and a key material for generating the encryption key, to form encrypted key information.

Step 23: The electronic device generates and invokes write_to_fs([encrypted] key/random/IV, ..., flag_I), that is, a first writing module, based on the flag_I (that is, marker information) and a preset writing module in a file system layer by using the system-related function such as the key/key _material generation process, to store the encrypted key information.

Step 24: The electronic device generates and invokes write_to_block ([encrypted] key/random/IV, ..., flag_I)), that is, a third writing module, in the file system layer based on the flag_I and a preset writing module in a device driver layer, to store the encrypted key information, and assigns a target virtual address to the encrypted key information from a fixed logical page number LPN based on the flag_I.

Step 25: The electronic device generates and invokes write_to_ftl ([encrypted] key/random/IV, ..., flag_I), that is, a second writing module, in the device driver layer based on the flag_I and a preset writing module in a flash translation layer, to store the encrypted key information.

Step 26: The electronic device establishes a target mapping table in the flash translation layer, then assigns a target data block to the encrypted key information in the target mapping table based on the flag_I, and stores the encrypted key information in the target data block in the target mapping table.

It should be noted that all the encrypted key information is stored by using the system architecture provided in FIG. 5.

In this embodiment of this application, because the sensitive data is stored in plaintext, even if the sensitive data is encrypted for storage subsequently, security of the original unencrypted sensitive data cannot be ensured. Therefore, when the sensitive data of the user is generated, the data is immediately encrypted to obtain the encrypted key information, and the encrypted key information is stored in the target storage area, so that security of data storage can be improved, and when the user needs to delete the data, the sensitive data can be physically deleted quickly and efficiently.

Optionally, in a third implementation provided in this embodiment of this application, the foregoing step 301 may be specifically implemented through the following step 301a to step 301c.

Step 301a: The electronic device starts, in an application layer, a trusted application corresponding to the application layer in a trusted execution environment.

In this embodiment of this application, if an application (such as APP 1) needs to store key information, sensitive data, and other important information associated with the application in the RPMB, a corresponding trusted application (Trusted Application, TA) (such as a first TA) in the trusted execution environment (Trusted Execution Environment, TEE) may be started.

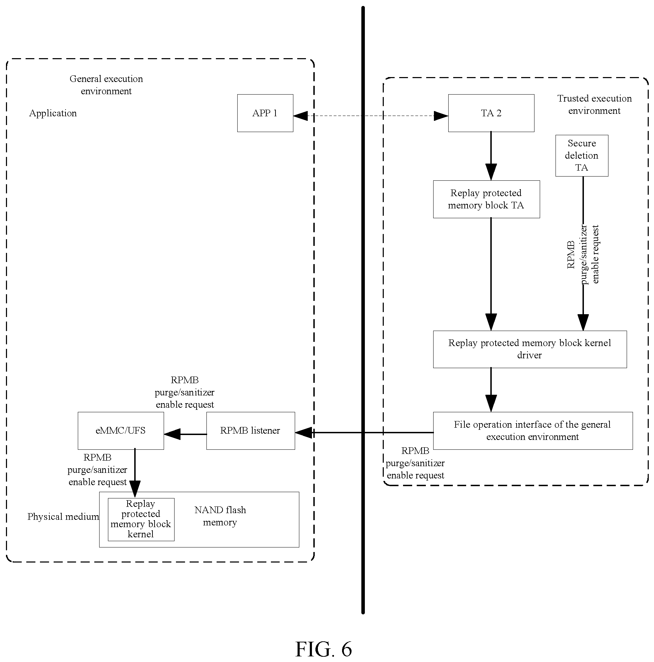

FIG. 6 is a system architecture diagram of a data storage method according to an embodiment of this application. As shown in FIG. 6, the electronic device may encrypt target data for storage based on a system architecture provided in FIG. 6, so that physical deletion can be performed quickly and efficiently later.

Step 301b: The electronic device invokes, based on the trusted application corresponding to the application layer, a trusted application corresponding to the RPMB, and sends either of the encryption key of the sensitive data and the key material for generating the encryption key from the application layer to the trusted application corresponding to the RPMB.

In this embodiment of this application, the electronic device may invoke, by using the first TA, a trusted application (such as a second TA) for reading and writing the RPMB, and sends either of the encryption key of the sensitive data and the key material for generating the encryption key from the application layer to the RPMB, and then may invoke an encryption module by using the second TA, to calculate and encapsulate data sent by the first TA, so that either of the encryption key of the sensitive data and the key material for generating the encryption key can be sent to the trusted application corresponding to the RPMB.

Step 301c: The electronic device encrypts, by using the trusted application corresponding to the RPMB, either of the encryption key of the sensitive data and the key material for generating the encryption key, to form the encrypted key information.

In this embodiment of this application, after the trusted application corresponding to the RPMB receives either of the encryption key of the sensitive data and the key material for generating the encryption key, the electronic device may encrypt, by using the trusted application corresponding to the RPMB, either of the encryption key of the sensitive data and the key material for generating the encryption key, to form the encrypted key information, so that the electronic device can store the encrypted key information.

Optionally, in a fourth implementation provided in this embodiment of this application, at least part of the target data is stored in the RPMB, and the foregoing step 302 may be specifically implemented through the following step 302a to step 302c.

Step 302a: The electronic device sends the encrypted key information and a file operation system command to an RPMB listener by using an RPMB kernel driver and using a trusted application corresponding to the RPMB.

Optionally, in this embodiment of this application, the electronic device may send the encrypted key information and the file operation system command to the RPMB listener (RPMB listener) on the REE side by using the RPMB kernel driver (RPMB kernel driver) and using the trusted application corresponding to the RPMB and the file operation system command (REE file operation system command), thereby triggering the electronic device to store the encrypted key information.

Step 302b: The electronic device sends the encrypted key information and the file operation system command to a UFS-based file system by using the RPMB listener.

Optionally, in this embodiment of this application, after the electronic device receives the encrypted key information and the file operation system command by using the RPMB listener, the electronic device may forward the encrypted key information and the file operation system command to the eMMC/UFS by using the RPMB listener on the REE side.

Step 302c: The electronic device stores the encrypted key information in the RPMB based on the file operation system command by using the UFS-based file system.

Optionally, in this embodiment of this application, after the electronic device receives the encrypted key information and the file operation system command by using the UFS-based file system, the electronic device may be triggered, based on the file operation system command by using the UFS-based file system, to store the encrypted key information in the RPMB.

Optionally, in a fifth implementation provided in this embodiment of this application, at least part of the target data is stored in the UDA, and the foregoing step 302 may be specifically implemented through the following step 302d to step 302h.

Step 302d: The electronic device invokes a first writing module based on the marker information and a preset writing module in a file system layer.

The first writing module includes the marker information.

In this embodiment of this application, in a case that at least part of the target data is stored in the UDA, the electronic device may invoke the first writing module based on the marker information and the preset writing module in the file system layer, so that the electronic device can transmit the at least part of the target data, that is, transmit the encrypted key information.

Optionally, in this embodiment of this application, the electronic device invokes a first writing function based on the marker information and a preset writing function in the file system layer.

For example, the preset writing function in the file system layer may be: write_to_fs([encrypted] key/random/IV, ...).

For example, the first writing function may be: write_to_fs([encrypted] key/random/IV, ..., flag_I).

Optionally, in this embodiment of this application, the electronic device may generate the first writing function based on the marker information and the preset writing function in the file system layer, that is, add an input parameter flag_I in the preset function in the file system layer, to generate the first writing function, so that the first writing function can be distinguished from other data to be stored.

Step 302e: The electronic device sends the encrypted key information from an application layer to the file system layer by using the first writing module.

In this embodiment of this application, the electronic device may invoke the first writing module, so that the electronic device can send the encrypted key information from the application layer to the file system layer by using the first writing module.

Optionally, in this embodiment of this application, the electronic device sends the encrypted key information from the application layer to the file system layer by using the first writing function.

Optionally, in this embodiment of this application, the system-related function of the electronic device (such as the key or key material generation function: key/key_material generation process) invokes the first writing function/module, that is, a writing function/module (that is, write_to_fs([encrypted] key/random/IV, ..., flag_I)) generated based on the marker information and the preset writing function in the file system layer, and sends the encrypted key information from the application layer to the file system layer, to store the encrypted key information.

Step 302f: The electronic device assigns a target virtual address to the encrypted key information from a logical page number LPN in the file system layer based on the marker information.

In this embodiment of this application, the electronic device may assign an appropriate virtual address, that is, the target virtual address, to the encrypted key information from the logical page number LPN in the file system layer based on the marker information, where the logical page number LPN may be continuous or discontinuous.

Optionally, in this embodiment of this application, the logical page number LPN assigned by ext4/F2FS/UBIFS + fscrypt to the target data through the file system layer is fixed, but the fixed logical page number LPN may be continuous or discontinuous.

Step 302g: The electronic device sends the encrypted key information and the target virtual address from the file system layer to a flash translation layer through a device driver layer.

In this embodiment of this application, after the electronic device assigns the target virtual address to the encrypted key information from the logical page number LPN in the file system layer based on the marker information, the electronic device may send the encrypted key information and the target virtual address from the file system layer to the flash translation layer through the device driver layer.

Optionally, in this embodiment of this application, the electronic device may send the encrypted key information and the target virtual address from the file system layer to the flash translation layer through the device driver layer based on the marker information and a preset writing function in the flash translation layer.

Optionally, in this embodiment of this application, the foregoing step 302g may be specifically implemented through the following step 302g1 to step 302g4.

Step 302g1: The electronic device invokes a third writing module based on the marker information and a preset writing module in the device driver layer.

The third writing module includes the marker information.

Optionally, in this embodiment of this application, the electronic device invokes the third writing module based on the marker information and the preset writing module in the device driver layer, so that the electronic device transmits the encrypted key information and the target virtual address.

Optionally, in this embodiment of this application, the electronic device invokes a third writing function based on the marker information and a preset writing function in the device driver layer.

Optionally, in this embodiment of this application, the electronic device may generate the third writing function based on the marker information and the preset writing function in the device driver layer, that is, add an input parameter flag_I in the preset function in the device driver layer, to generate the third writing function, so that the third writing function can be distinguished from other data to be stored.

For example, the preset writing function in the device driver layer may be:
write_to_block([encrypted] key/random/IV, ...).

For example, the first writing function may be:
write_to_block ([encrypted] key/random/IV, ..., flag_I).

Optionally, in this embodiment of this application, the system-related function of the electronic device (such as the key or key material generation function: key/key _material generation process) invokes a second writing function/module, that is, a writing function/module (that is, write_to_block ([encrypted] key/random/IV, ..., flag_I)) generated based on the marker information and the preset writing function in the device driver layer, and sends the encrypted key information and the target virtual address from the file system layer to the device driver layer, and further from the device driver layer to the flash translation layer.

Step 302g2: The electronic device sends the encrypted key information and the target virtual address from the file system layer to the device driver layer by using the third writing module.

In this embodiment of this application, after the electronic device invokes the third writing module based on the marker information and the preset writing module in the device driver layer, the electronic device may send the encrypted key information and the target virtual address from the file system layer to the device driver layer by using the third writing module.

Step 302g3: The electronic device invokes the second writing module based on the marker information and a preset writing module in the flash translation layer.

In this embodiment of this application, after the electronic device sends the encrypted key information and the target virtual address from the file system layer to the device driver layer by using the third writing module, the electronic device may invoke the second writing module based on the marker information and the preset writing module in the flash translation layer.

Optionally, in this embodiment of this application, the electronic device invokes a second writing function based on the marker information and the preset writing function in the flash translation layer.

Optionally, in this embodiment of this application, the electronic device may generate the second writing function based on the marker information and the preset writing function in the flash translation layer, that is, add an input parameter flag_I in the preset function in the flash translation layer to generate the second writing function.

Step 302g4: The electronic device sends the encrypted key information and the target virtual address from the device driver layer to the flash translation layer by using the second writing module.

In this embodiment of this application, after the electronic device invokes the second writing module based on the marker information and the preset writing module in the flash translation layer, the electronic device may send the encrypted key information and the target virtual address from the device driver layer to the flash translation layer by using the second writing module.

Optionally, in this embodiment of this application, the system-related function of the electronic device (such as the key or key material generation function: key/key _material generation process) invokes a second writing function/module, that is, a second writing function/module write_to_ftl ([encrypted] key/random/IV, ..., flag_I)) generated based on the marker information and the preset writing function in the flash translation layer, and sends the encrypted key information and the target virtual address from the device driver layer to the flash translation layer, to store the encrypted key information and the target virtual address.

Step 302h: The electronic device establishes a target mapping table in the flash translation layer, and stores the encrypted key information in a target data block in the target mapping table by using a second writing module.

The second writing module is a writing module corresponding to the flash translation layer, the second writing module includes the marker information, and the marker information is used to determine the target data block.

In this embodiment of this application, the electronic device may establish the target mapping table in the flash translation layer, and store the received encrypted key information in the target data block in the target mapping table by using the second writing module, to store the encrypted key information.

Optionally, in this embodiment of this application, the electronic device establishes the target mapping table in the flash translation layer, and stores the encrypted key information in the target data block in the target mapping table by using the second writing function.

Optionally, in this embodiment of this application, the electronic device may establish a target mapping table in the flash translation layer based on the flag_I in the second writing function/module, for managing all physical blocks (for example, a first data block) storing sensitive data (for example, first data and first information) in the flash memory, where the target mapping table includes at least one of the following: a logical page number (Logical Page Number, LPN), a logical block number (Logical Block Number, LBN), a physical block number (Physical Block Number, PBN), marker information (flag_I) of target data, and the like.

Optionally, in this embodiment of this application, the target mapping table may be stored in a block in the flash memory, and the block may be referred to as a physical block or an important information physical block (it is a map block, and several other existing physical blocks include data/log/free/dirty blocks).

It should be noted that the target mapping table is cached in the memory when the system of the electronic device is started.

Optionally, in this embodiment of this application, the FTL searches for a suitable physical block (block) in the target mapping table based on the flag_I written in the second writing function/module (for example, write_to_ftl ([encrypted] key/random/IV, ..., flag_I)), and then writes new data or updates existing data in an existing manner; and if an address of a physical block changes, a new physical block number needs to be synchronized to the target mapping table, and a metadata status value of the new physical block needs to be changed to flag_I.

Optionally, in this embodiment of this application, an attribute tag flag_I is added to a status value of metadata of the physical block (block) (other existing status values are: regular, sequentially written, randomly written, and other system-defined system specific purposes).

It should be noted that if a hybrid mode is used for address mapping of the FTL (hybrid FTL), in a case that the FTL is at a page level or a block level, information included in the target mapping table is different.

The data deletion method provided in this embodiment of this application may be performed by a data deletion apparatus. A data deletion apparatus provided in an embodiment of this application is described by assuming that the data deletion apparatus performs the data deletion method in this embodiment of this application.

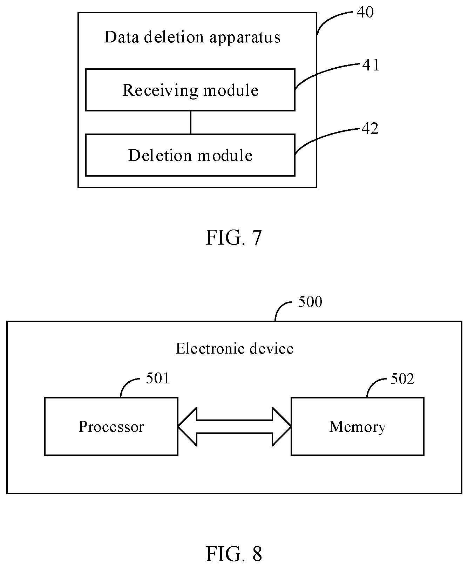

FIG. 7 is a schematic diagram of a possible structure of a data deletion apparatus according to an embodiment of this application. As shown in FIG. 7, the data deletion apparatus 40 may include a receiving module 41 and a deletion module 42.

The receiving module 41 is configured to receive a first instruction, where the first instruction is used to instruct an electronic device to delete target data, and the first instruction includes marker information of the target data. The deletion module 42 is configured to delete, in response to the first instruction received by the receiving module 41, the target data from a target storage area based on the marker information in the first instruction, where the target storage area includes a replay protected memory block RPMB, or a user data area UDA and a replay protected memory block RPMB.

This embodiment of this application provides a data deletion apparatus. The electronic device may receive the first instruction for instructing the electronic device to delete the target data, and delete the target data from the RPMB or from the UDA and the RPMB based on the marker information of the target data included in the first instruction. Therefore, even if an electronic device of a user is lost, private data of the electronic device can be deleted. This improves efficiency and flexibility of the electronic device in processing the private data.

In a possible implementation, the target data includes encrypted key information; and the data deletion apparatus 40 further includes an encryption module and a storage module, where the encryption module is configured to encrypt either of an encryption key of sensitive data and a key material for generating the encryption key, to form the encrypted key information; and the storage module is configured to store the encrypted key information in the target storage area, where the key material for generating the encryption key includes at least one of the following: a random number, an initialization vector, a timestamp, and a file identifier.

In a possible implementation, the deletion module 42 is specifically configured to: in a case that the target data is stored in the RPMB, send a physical deletion request message to the RPMB based on the marker information in the first instruction by using a trusted application in a trusted execution environment; send the physical deletion request message to an RPMB listener by using an RPMB kernel driver and a file operation interface; and delete the target data from the RPMB through a control module of a UFS-based file system by using the RPMB listener.

In a possible implementation, the deletion module 42 is specifically configured to: in a case that the target data is stored in the RPMB and the UDA, delete first target data from the RPMB and second target data from the UDA based on the marker information in the first instruction.

In a possible implementation, the deletion module 42 is specifically configured to: send a physical deletion request message to the RPMB based on the marker information in the first instruction by using a trusted application in a trusted execution environment; send the physical deletion request message to an RPMB listener by using an RPMB kernel driver and a file operation interface; and delete the first target data from the RPMB through a control module of a UFS-based file system by using the RPMB listener.

In a possible implementation, the deletion module 42 is specifically configured to: address the second target data from a fixed logical page number LPN in a file system layer based on the marker information in the first instruction by using a first deletion module 42 in the file system layer and a second deletion module 42 in a device driver layer, to obtain a target virtual address; and determine, from a target mapping table in a flash translation layer based on the target virtual address and the marker information by using a preset deletion module 42 in the flash translation layer, a target data block storing the second target data, and delete the second target data in the target data block.

In a possible implementation, the deletion module 42 is specifically configured to: start garbage collection by using a controller, and reclaim the target data block; or invoke a hardware physical deletion command by using the controller, to delete the second target data from the target data block.

In a possible implementation, the encryption module is specifically configured to: start, in an application layer, a trusted application corresponding to the application layer in a trusted execution environment; invoke, based on the trusted application corresponding to the application layer, a trusted application corresponding to the RPMB, and send either of the encryption key of the sensitive data and the key material for generating the encryption key from the application layer to the trusted application corresponding to the RPMB; and encrypt, by using the trusted application corresponding to the RPMB, either of the encryption key of the sensitive data and the key material for generating the encryption key, to form the encrypted key information.

In a possible implementation, at least part of the target data is stored in the RPMB; and the storage module is specifically configured to: send the encrypted key information and a file operation system command to an RPMB listener by using an RPMB kernel driver and using a trusted application corresponding to the RPMB; send the encrypted key information and the file operation system command to a UFS-based file system by using the RPMB listener; and store the encrypted key information in the RPMB based on the file operation system command by using the UFS-based file system.

In a possible implementation, at least part of the target data is stored in the UDA; and the storage module is specifically configured to: invoke a first writing module based on the marker information and a preset writing module in a file system layer, where the first writing module includes the marker information; send the encrypted key information from an application layer to the file system layer by using the first writing module; assign a target virtual address to the encrypted key information from a logical page number LPN in the file system layer based on the marker information; send the encrypted key information and the target virtual address from the file system layer to a flash translation layer through a device driver layer; and establish a target mapping table in the flash translation layer, and store the encrypted key information in a target data block in the target mapping table by using a second writing module, where the second writing module is a writing module corresponding to the flash translation layer, the second writing module includes the marker information, and the marker information is used to determine the target data block.

In a possible implementation, the storage module is specifically configured to: invoke a third writing module based on the marker information and a preset writing module in the device driver layer, where the third writing module includes the marker information; send the encrypted key information and the target virtual address from the file system layer to the device driver layer by using the third writing module; invoke the second writing module based on the marker information and a preset writing module in the flash translation layer; and send the encrypted key information and the target virtual address from the device driver layer to the flash translation layer by using the second writing module.

In a possible implementation, the target data further includes data attribute information, the data attribute information is used to identify attributes of the sensitive data, and the data attribute information includes at least one of the following: a file size, a file permission, a file timestamp, an extended attribute, and configuration information; and the data attribute information and the key information are both stored in the target storage area.

The data deletion apparatus in this embodiment of this application may be an electronic device, or may be a component such as an integrated circuit or a chip in an electronic device. The electronic device may be a terminal, or may be other devices than a terminal. For example, the electronic device may be a mobile phone, a tablet personal computer, a notebook computer, a palmtop computer, an in-vehicle electronic device, a mobile Internet device (Mobile Internet Device, MID), an augmented reality (augmented reality, AR) or virtual reality (virtual reality, VR) device, a robot, a wearable device, an ultra-mobile personal computer (ultra-mobile personal computer, UMPC), a netbook, a personal digital assistant (personal digital assistant, PDA), or the like; or the electronic device may be a server, a network attached storage (Network Attached Storage, NAS), a personal computer (personal computer, PC), a television (television, TV), a teller machine, a self-service machine, or the like. This is not specifically limited in this embodiment of this application.

The data deletion apparatus in this embodiment of this application may be an apparatus having an operating system. The operating system may be an Android (Android) operating system, an iOS operating system, or other possible operating systems, and is not specifically limited in this embodiment of this application.

The data deletion apparatus provided in this embodiment of this application is capable of implementing the processes implemented in the method embodiments in FIG. 1 to FIG. 6. To avoid repetition, details are not described herein again.

Optionally, as shown in FIG. 8, an embodiment of this application further provides an electronic device 500, including a processor 501 and a memory 502. The memory 502 stores a program or instructions capable of running on the processor 501. When the program or instructions are executed by the processor 501, the steps of the foregoing embodiment of the data deletion method are implemented, with the same technical effect achieved. To avoid repetition, details are not described herein again.

It should be noted that electronic devices in this embodiment of this application include the foregoing mobile electronic device and nonmobile electronic device.

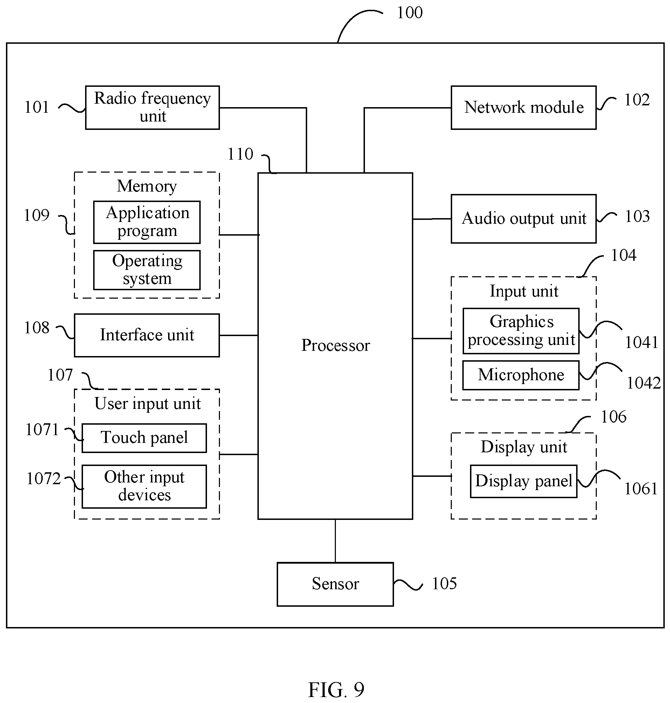

FIG. 9 is a schematic diagram of a hardware structure of an electronic device for implementing an embodiment of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the electronic device 100 may further include a power supply (such as a battery) for supplying power to the components. The power supply may be logically connected to the processor 110 through a power management system. In this way, functions such as charge management, discharge management, and power consumption management are implemented by using the power management system. The structure of the electronic device shown in FIG. 9 does not constitute a limitation on the electronic device. The electronic device may include more or fewer components than those shown in the figure, or some components are combined, or component arrangements are different. Details are not described herein again.

The processor 110 is configured to: receive a first instruction, where the first instruction is used to instruct the electronic device to delete target data, and the first instruction includes marker information of the target data; and delete, in response to the first instruction, the target data from a target storage area based on the marker information in the first instruction, where the target storage area includes a replay protected memory block RPMB, or a user data area UDA and a replay protected memory block RPMB.

This embodiment of this application provides an electronic device. The electronic device may receive the first instruction for instructing the electronic device to delete the target data, and delete the target data from the RPMB or from the UDA and the RPMB based on the marker information of the target data included in the first instruction. Therefore, even if an electronic device of a user is lost, private data of the electronic device can be deleted. This improves efficiency and flexibility of the electronic device in processing the private data.

Optionally, in this embodiment of this application, the target data includes encrypted key information; and the processor 110 is configured to encrypt either of an encryption key of sensitive data and a key material for generating the encryption key, to form the encrypted key information. The memory 109 is configured to store the encrypted key information in the target storage area. The key material for generating the encryption key includes at least one of the following: a random number, an initialization vector, a timestamp, and a file identifier.

Optionally, in this embodiment of this application, the processor 110 is specifically configured to: in a case that the target data is stored in the RPMB, send a physical deletion request message to the RPMB based on the marker information in the first instruction by using a trusted application in a trusted execution environment; send the physical deletion request message to an RPMB listener by using an RPMB kernel driver and a file operation interface; and delete the target data from the RPMB through a control module of a UFS-based file system by using the RPMB listener.

Optionally, in this embodiment of this application, the processor 110 is specifically configured to: in a case that the target data is stored in the RPMB and the UDA, delete first target data from the RPMB and second target data from the UDA based on the marker information in the first instruction.

Optionally, in this embodiment of this application, the processor 110 is specifically configured to: send a physical deletion request message to the RPMB based on the marker information in the first instruction by using a trusted application in a trusted execution environment; send the physical deletion request message to an RPMB listener by using an RPMB kernel driver and a file operation interface; and delete the first target data from the RPMB through a control module of a UFS-based file system by using the RPMB listener.

Optionally, in this embodiment of this application, the processor 110 is specifically configured to: address the second target data from a fixed logical page number LPN in a file system layer based on the marker information in the first instruction by using a first processor 110 in the file system layer and a second processor 110 in a device driver layer, to obtain a target virtual address; and determine, from a target mapping table in a flash translation layer based on the target virtual address and the marker information by using a preset processor 110 in the flash translation layer, a target data block storing the second target data, and delete the second target data in the target data block.

Optionally, in this embodiment of this application, the processor 110 is specifically configured to: start garbage collection by using a controller, and reclaim the target data block; or invoke a hardware physical deletion command by using the controller, to delete the second target data from the target data block.

Optionally, in this embodiment of this application, the processor 110 is specifically configured to: start, in an application layer, a trusted application corresponding to the application layer in a trusted execution environment; invoke, based on the trusted application corresponding to the application layer, a trusted application corresponding to the RPMB, and send either of the encryption key of the sensitive data and the key material for generating the encryption key from the application layer to the trusted application corresponding to the RPMB; and encrypt, by using the trusted application corresponding to the RPMB, either of the encryption key of the sensitive data and the key material for generating the encryption key, to form the encrypted key information.

Optionally, in this embodiment of this application, at least part of the target data is stored in the RPMB; and the memory 109 is specifically configured to: send the encrypted key information and a file operation system command to an RPMB listener by using an RPMB kernel driver and using a trusted application corresponding to the RPMB; send the encrypted key information and the file operation system command to a UFS-based file system by using the RPMB listener; and store the encrypted key information in the RPMB based on the file operation system command by using the UFS-based file system.

Optionally, in this embodiment of this application, at least part of the target data is stored in the UDA; and the memory 109 is specifically configured to: invoke a first writing module based on the marker information and a preset writing module in a file system layer, where the first writing module includes the marker information; send the encrypted key information from an application layer to the file system layer by using the first writing module; assign a target virtual address to the encrypted key information from a logical page number LPN in the file system layer based on the marker information; send the encrypted key information and the target virtual address from the file system layer to a flash translation layer through a device driver layer; and establish a target mapping table in the flash translation layer, and store the encrypted key information in a target data block in the target mapping table by using a second writing module, where the second writing module is a writing module corresponding to the flash translation layer, the second writing module includes the marker information, and the marker information is used to determine the target data block.

Optionally, in this embodiment of this application, the memory 109 is specifically configured to: invoke a third writing module based on the marker information and a preset writing module in the device driver layer, where the third writing module includes the marker information; send the encrypted key information and the target virtual address from the file system layer to the device driver layer by using the third writing module; invoke the second writing module based on the marker information and a preset writing module in the flash translation layer; and send the encrypted key information and the target virtual address from the device driver layer to the flash translation layer by using the second writing module.

Optionally, in this embodiment of this application, the target data further includes data attribute information, the data attribute information is used to identify attributes of the sensitive data, and the data attribute information includes at least one of the following: a file size, a file permission, a file timestamp, an extended attribute, and configuration information; and the data attribute information and the key information are both stored in the target storage area.

It should be understood that, in this embodiment of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 includes at least one of a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function button (such as a volume control button or a power button), a trackball, a mouse, and a joystick. Details are not described herein again.

The memory 109 may be configured to store software programs and various data. The memory 109 may primarily include a first storage area for storing programs or instructions and a second storage area for storing data. The first storage area may store an operating system, an application program or instructions required by at least one function (such as an audio play function and an image play function), and the like. In addition, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 109 in this embodiment of this application includes but is not limited to these and any other suitable types of memories.

The processor 110 may include one or more processing units. Optionally, the processor 110 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 110.

An embodiment of this application further provides a readable storage medium. The readable storage medium stores a program or instructions. When the program or instructions are executed by a processor, each process of the foregoing embodiment of the data deletion method is implemented, with the same technical effect achieved. To avoid repetition, details are not described herein again.

The processor is a processor in the electronic device in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the data deletion method, with the same technical effect achieved. To avoid repetition, details are not described herein again.

It should be understood that the chip provided in this embodiment of this application may also be referred to as a system-level chip, a system chip, a chip system, a system-on-chip, or the like.

An embodiment of this application provides a computer program product. The program product is stored in a storage medium. The program product is executed by at least one processor to implement each process of the foregoing embodiment of the data deletion method, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A data deletion method, applied to an electronic device and comprising:
receiving a first instruction, wherein the first instruction is used to instruct the electronic device to delete target data, and the first instruction comprises marker information of the target data; and
deleting, in response to the first instruction, the target data from a target storage area based on the marker information in the first instruction, wherein the target storage area comprises a replay protected memory block RPMB, or a user data area UDA and a replay protected memory block RPMB.

2. The method according to claim 1, wherein the target data comprises encrypted key information; and the method further comprises:
encrypting either of an encryption key of sensitive data and a key material for generating the encryption key, to form the encrypted key information; and
storing the encrypted key information in the target storage area, wherein
the key material for generating the encryption key comprises at least one of the following: a random number, an initialization vector, a timestamp, and a file identifier.

3. The method according to claim 1, wherein the deleting the target data from a target storage area based on the marker information in the first instruction comprises:
in a case that the target data is stored in the RPMB, sending a physical deletion request message to the RPMB based on the marker information in the first instruction by using a trusted application in a trusted execution environment;
sending the physical deletion request message to an RPMB listener by using an RPMB kernel driver and a file operation interface; and
deleting the target data from the RPMB through a control module of a UFS-based file system by using the RPMB listener.

4. The method according to claim 1, wherein the target data comprises first target data and second target data; and the deleting the target data from a target storage area based on the marker information in the first instruction comprises:
in a case that the target data is stored in the RPMB and the UDA, deleting the first target data from the RPMB and the second target data from the UDA based on the marker information in the first instruction.

5. The method according to claim 4, wherein the deleting the first target data from the RPMB based on the marker information in the first instruction comprises:
sending a physical deletion request message to the RPMB based on the marker information in the first instruction by using a trusted application in a trusted execution environment;
sending the physical deletion request message to an RPMB listener by using an RPMB kernel driver and a file operation interface; and
deleting the first target data from the RPMB through a control module of a UFS-based file system by using the RPMB listener.

6. The method according to claim 4, wherein the deleting the second target data from the UDA comprises:
addressing the second target data from a fixed logical page number LPN in a file system layer based on the marker information in the first instruction by using a first deletion module in the file system layer and a second deletion module in a device driver layer, to obtain a target virtual address; and
determining, from a target mapping table in a flash translation layer based on the target virtual address and the marker information by using a preset deletion module in the flash translation layer, a target data block storing the second target data, and deleting the second target data in the target data block.

7. The method according to claim 6, wherein the deleting the second target data in the target data block comprises:
starting garbage collection by using a controller, and reclaiming the target data block;
or
invoking a hardware physical deletion command by using the controller, to delete the second target data from the target data block.

8. The method according to claim 2, wherein the encrypting either of an encryption key of sensitive data and a key material for generating the encryption key, to form the encrypted key information comprises:
starting, in an application layer, a trusted application corresponding to the application layer in a trusted execution environment;
invoking, based on the trusted application corresponding to the application layer, a trusted application corresponding to the RPMB, and sending either of the encryption key of the sensitive data and the key material for generating the encryption key from the application layer to the trusted application corresponding to the RPMB; and
encrypting, by using the trusted application corresponding to the RPMB, either of the encryption key of the sensitive data and the key material for generating the encryption key, to form the encrypted key information.

9. The method according to claim 2, wherein at least part of the target data is stored in the RPMB; and
the storing the encrypted key information in the target storage area comprises:
sending the encrypted key information and a file operation system command to an RPMB listener by using an RPMB kernel driver and using a trusted application corresponding to the RPMB;
sending the encrypted key information and the file operation system command to a UFS-based file system by using the RPMB listener; and
storing the encrypted key information in the RPMB based on the file operation system command by using the UFS-based file system.

10. The method according to claim 2, wherein at least part of the target data is stored in the UDA; and
the storing the encrypted key information in the target storage area comprises:
invoking a first writing module based on the marker information and a preset writing module in a file system layer, wherein the first writing module comprises the marker information;
sending the encrypted key information from an application layer to the file system layer by using the first writing module;
assigning a target virtual address to the encrypted key information from a logical page number LPN in the file system layer based on the marker information;
sending the encrypted key information and the target virtual address from the file system layer to a flash translation layer through a device driver layer; and
establishing a target mapping table in the flash translation layer, and storing the encrypted key information in a target data block in the target mapping table by using a second writing module, wherein the second writing module is a writing module corresponding to the flash translation layer, the second writing module comprises the marker information, and the marker information is used to determine the target data block.

11. The method according to claim 10, wherein the sending the encrypted key information and the target virtual address from the file system layer to a flash translation layer through a device driver layer comprises:
invoking a third writing module based on the marker information and a preset writing module in the device driver layer, wherein the third writing module comprises the marker information;
sending the encrypted key information and the target virtual address from the file system layer to the device driver layer by using the third writing module;
invoking the second writing module based on the marker information and a preset writing module in the flash translation layer; and
sending the encrypted key information and the target virtual address from the device driver layer to the flash translation layer by using the second writing module.

12. The method according to claim 2, wherein the target data further comprises data attribute information, the data attribute information is used to identify attributes of the sensitive data, and the data attribute information comprises at least one of the following: a file size, a file permission, a file timestamp, an extended attribute, and configuration information; and the data attribute information and the key information are both stored in the target storage area.

13. A data deletion apparatus, comprising a receiving module and a deletion module, wherein
the receiving module is configured to receive a first instruction, wherein the first instruction is used to instruct an electronic device to delete target data, and the first instruction comprises marker information of the target data; and
the deletion module is configured to delete, in response to the first instruction received by the receiving module, the target data from a target storage area based on the marker information in the first instruction, wherein the target storage area comprises a replay protected memory block RPMB, or a user data area UDA and a replay protected memory block RPMB.

14. The apparatus according to claim 13, wherein the target data comprises encrypted key information; and the apparatus further comprises an encryption module and a storage module, wherein
the encryption module is configured to encrypt either of an encryption key of sensitive data and a key material for generating the encryption key, to form the encrypted key information; and
the storage module is configured to store the encrypted key information in the target storage area, wherein
the key material for generating the encryption key comprises at least one of the following: a random number, an initialization vector, a timestamp, and a file identifier.

15. The apparatus according to claim 13, wherein the deletion module is specifically configured to: in a case that the target data is stored in the RPMB, send a physical deletion request message to the RPMB based on the marker information in the first instruction by using a trusted application in a trusted execution environment; send the physical deletion request message to an RPMB listener by using an RPMB kernel driver and a file operation interface; and delete the target data from the RPMB through a control module of a UFS-based file system by using the RPMB listener.

16. The apparatus according to claim 13, wherein the deletion module is specifically configured to: in a case that the target data is stored in the RPMB and the UDA, delete first target data from the RPMB and second target data from the UDA based on the marker information in the first instruction.

17. The apparatus according to claim 16, wherein the deletion module is specifically configured to: send a physical deletion request message to the RPMB based on the marker information in the first instruction by using a trusted application in a trusted execution environment; send the physical deletion request message to an RPMB listener by using an RPMB kernel driver and a file operation interface; and delete the first target data from the RPMB through a control module of a UFS-based file system by using the RPMB listener.

18. The apparatus according to claim 16, wherein the deletion module is specifically configured to: address the second target data from a fixed logical page number LPN in a file system layer based on the marker information in the first instruction by using a first deletion module in the file system layer and a second deletion module in a device driver layer, to obtain a target virtual address; and determine, from a target mapping table in a flash translation layer based on the target virtual address and the marker information by using a preset deletion module in the flash translation layer, a target data block storing the second target data, and delete the second target data in the target data block.

19. The apparatus according to claim 18, wherein the deletion module is specifically configured to: start garbage collection by using a controller, and reclaim the target data block; or invoke a hardware physical deletion command by using the controller, to delete the second target data from the target data block.

20. The apparatus according to claim 14, wherein the encryption module is specifically configured to: start, in an application layer, a trusted application corresponding to the application layer in a trusted execution environment; invoke, based on the trusted application corresponding to the application layer, a trusted application corresponding to the RPMB, and send either of the encryption key of the sensitive data and the key material for generating the encryption key from the application layer to the trusted application corresponding to the RPMB; and encrypt, by using the trusted application corresponding to the RPMB, either of the encryption key of the sensitive data and the key material for generating the encryption key, to form the encrypted key information.

21. The apparatus according to claim 14, wherein at least part of the target data is stored in the RPMB; and the storage module is specifically configured to: send the encrypted key information and a file operation system command to an RPMB listener by using an RPMB kernel driver and using a trusted application corresponding to the RPMB; send the encrypted key information and the file operation system command to a UFS-based file system by using the RPMB listener; and store the encrypted key information in the RPMB based on the file operation system command by using the UFS-based file system.

22. The apparatus according to claim 14, wherein at least part of the target data is stored in the UDA; and
the storage module is specifically configured to: invoke a first writing module based on the marker information and a preset writing module in a file system layer, wherein the first writing module comprises the marker information; send the encrypted key information from an application layer to the file system layer by using the first writing module; assign a target virtual address to the encrypted key information from a logical page number LPN in the file system layer based on the marker information; send the encrypted key information and the target virtual address from the file system layer to a flash translation layer through a device driver layer; and establish a target mapping table in the flash translation layer, and store the encrypted key information in a target data block in the target mapping table by using a second writing module, wherein the second writing module is a writing module corresponding to the flash translation layer, the second writing module comprises the marker information, and the marker information is used to determine the target data block.

23. The apparatus according to claim 22, wherein the storage module is specifically configured to: invoke a third writing module based on the marker information and a preset writing module in the device driver layer, wherein the third writing module comprises the marker information; send the encrypted key information and the target virtual address from the file system layer to the device driver layer by using the third writing module; invoke the second writing module based on the marker information and a preset writing module in the flash translation layer; and send the encrypted key information and the target virtual address from the device driver layer to the flash translation layer by using the second writing module.

24. The apparatus according to claim 14, wherein the target data further comprises data attribute information, the data attribute information is used to identify attributes of the sensitive data, and the data attribute information comprises at least one of the following: a file size, a file permission, a file timestamp, an extended attribute, and configuration information; and the data attribute information and the key information are both stored in the target storage area.

25. An electronic device, comprising a processor and a memory, wherein the memory stores a program or instructions capable of running on the processor, and when the program or instructions are executed by the processor, the steps of the data deletion method according to any one of claims 1 to 12 are implemented.

26. A readable storage medium, wherein the readable storage medium stores a program or instructions, and when the program or instructions are executed by a processor, the steps of the data deletion method according to any one of claims 1 to 12 are implemented.

27. A chip, wherein the chip comprises a processor and a communication interface, the communication interface is coupled to the processor, and the processor is configured to run a program or instructions to implement the steps of the data deletion method according to any one of claims 1 to 12.

28. A computer program product, wherein the program product is executed by at least one processor to implement the steps of the data deletion method according to any one of claims 1 to 12.
